# EUROPEAN PATENT APPLICATION

(11) **EP 1 283 114 A1**
(43) Date of publication of application: **12.02.2003**
(21) Application number: 01830530.0
(22) Date of filing: 07.08.2001
(51) Int. Cl.: B60C 9/07, B60C 15/00, B29D 30/20, B29D 30/24

(54) **Tyre, method of manufacture thereof and drum therefor**

(71) Applicant: PIRELLI PNEUMATICI Società per Azioni, 20126 Milano (IT)
(72) Inventor: Daminelli, Giovanni, 20099 Sesto San Giovanni (Milano) (IT); Mancosu, Frederico, 20135 Milano (IT)
(74) Representative: Giannesi, Pier Giovanni

(57) **Abstract**

The invention relates to a tyre for vehicles in general, wherein the belt strips (24, 25) and the carcass are obtained from a same, initial, tubular semifinished product, by folding its end portions about the bead cores (4, 5) of the beads and overlapping the sidewalls (20a, 20b) of the carcass up to the crown portion (20c) thereof.

The invention also comprises a method and a drum for making the tyre, which allows the cords in the belt strips and in the crown portion of the carcass to be inclined with respect to the equatorial plane (p-p) of the tyre.

## Description

The invention relates to a tyre comprising a radial carcass extending between the reinforcing rings of the beads (usually known as bead cores) and folded around them, at least one belt structure arranged circumferentially over the carcass.

The tyres of this type are commonly used for motor cars, lorries and similar vehicles; they may be produced according to many configurations, obviously also with the addition of other components further to those mentioned above.

Among the several documents which describe these tyres and their structure, reference is made here to US patent Nos. 3,327,753 and 3,568,749.

The first of them illustrates a method for building a carcass from a tubular semifinished product, in which the cords lie parallel to the longitudinal axis of the semifinished product itself.

It should be pointed out that in the present description, the term "cords" is understood as indicating either the single cords (or single filaments) and the cords obtained by winding helically a plurality of such cords as well, in configurations which are known per se and commonly used in tyre technology.

The abovementioned semifinished product is arranged on an assembling drum and one or more belt strips having reinforcing cords inclined at a predefined angle with respect to the equatorial plane, are then applied circumferentially around it so that the increase in diameter which occurs when the assembling drum is inflated, produces a variation in the inclination either of the cords of the belt strip and of the carcass ply as well, in the underlying zone.

In the second patent considered above, however, there is described a carcass obtained with a plurality of thin bands extending obliquely between the bead wires and folded around them along the sidewalls of the tyre, up to the belt zone; in these folded-back portions the carcass cords have a radial lie.

Furthermore in this case, in the central zone of the carcass the bands of the latter are plaited with similar bands of the belt, inclined symmetrically with respect to the centre plane of the tyre.

Moreover, this document does not contain any explanation as to the manner with which the varying inclination of the bands is obtained.

From the brief summary of the cited prior documents it is possible to understand how the manufacture of the structures of known tyres requires the assembling of a number of different components; this may render their manufacturing more complex, for example owing to the management of the stocks in the storehouse for these components or assembling thereof during production.

Moreover, the abovementioned tyres have an excessive amount of material under the belt zone, where the radial carcass is subject to limited stress because of the presence of the belt.

As is known, an excessive amount of material results in an increase of the rolling resistance with a consequent increase in fuel consumption, heating of the structure and rapid wear thereof; furthermore, the presence of numerous components in the known structures gives rise to sudden variations in rigidity near the edges of the components (lateral ends of the belt strips and carcass ply), with a consequent concentration of stresses and structural weakening of the tyre carcass as a whole.

It should be noted in this connection that these stresses are normally located along the cords cutting lines, i.e. in zones which are already intrinsically weak since, as a result of the cut, there lacks the surface treatment which is normally provided to ensure firm fastening between cord and rubber.

The object of the present invention is to provide a tyre fit to overcome these drawbacks; the invention therefore aims at providing a tyre structure comprising at least one radial carcass and a belt, which is not formed by a multiplicity of components to be assembled, thereby, being substantially simplified.

The invention arises from the Applicant's realisation that the belt strips may be obtained from the tubular semifinished product which forms the carcass sleeve, by providing such a product with a length greater than that of a normal carcass ply with its known folded edges, thereby allowing to fold back the hem portions thereof around the bead wires and then arrange them on the belt zone.

To this end the invention provides a method for manufacturing a tyre structure, in which a toroidally formed radial carcass is first obtained from a tubular semifinished product, for example by means of an inflatable forming drum; thereafter the hem portions of the semifinished product are shaped, for example on respective inflatable forming drums, so as to allow their fording around the bead wires and to extend them along the sidewalls of the carcass, up to the belt zone.

The characterising features of the invention will appear more clearly from the description of two non-limiting examples thereof, provided hereinbelow with reference to the accompanying drawings wherein:
- Figures 1 to 4 illustrate in schematic form respective steps for manufacture of a first tyre structure according to the invention;
- Fig. 5 shows in schematic form a longitudinal cross-section through the inflatable drum for forming the tyre structure according to the preceding figures;
- Fig. 6 shows a plan view of the arrangement of the cords in the abovementioned tyre structure;
- Fig. 7 shows a cross-section through a tyre incorporating the structure of the invention;
- Figs. 8-12 show respective steps, similar to those already mentioned, for manufacturing a second tyre structure according to the invention;
- Fig. 13 shows a plan view of the arrangement of the cords in said second tyre structure.

As can be seen, in order to build a tyre structure according to the invention, a tubular semifinished product 1 having a length greater than that used in the abovementioned known art, is initially provided.

The semifinished product 1 consists of a tubular carcass ply, whose reinforcing cords 2 are incorporated in a rubber layer 3 (by means of calendering, drawing or other operation) and have an orientation parallel to the longitudinal axis of the tubular configuration; the cords may be made of different materials depending on the type of tyre to be produced: for example metal in the case of high-performance tyres, or rayon® or other natural and synthetic fibres for tyres with a lower performance level.

The tubular semifinished product 1 is arranged on an assembling drum 10 comprising a central element 11 and two lateral elements 12, 13, each of which is associated with a respective toroidal air chamber 14, 15 and 16; furthermore, the lateral elements are also provided with a second air chamber 17 and 18.

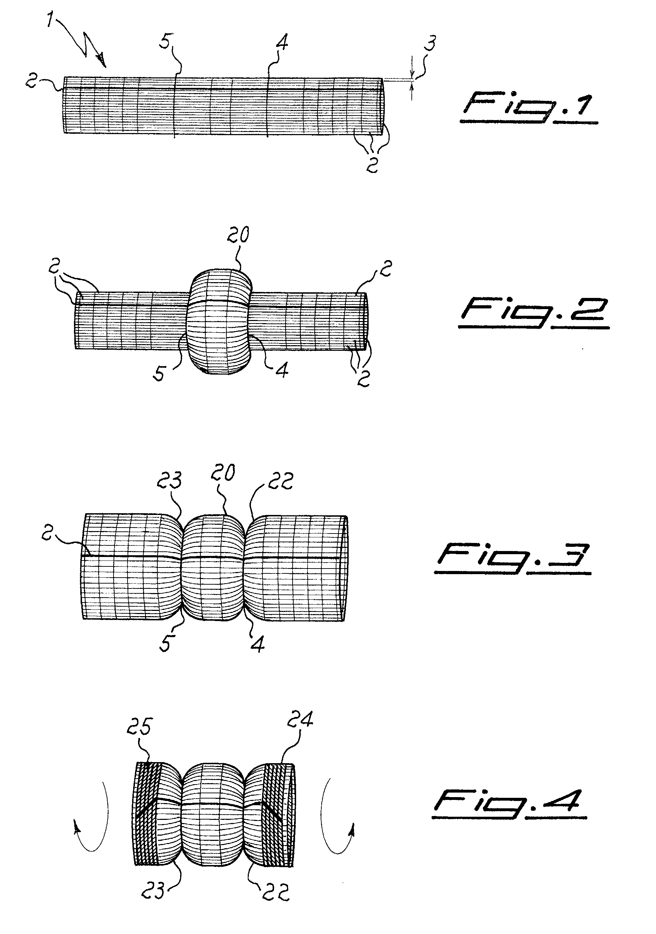

The two bead cores 4, 5 of the beads are mounted on the central portion of the semifinished product 1. Then, by inflating the air chamber 14 of the central element 11 of the drum 10, a toric carcass 20 comprising two sidewalls 20a, 20b and a crown portion 20c is formed; Figs. 2 and 5 show the condition of the system during this stage of the process.

After fitting the bead cores, the bead filling is deposited on their radially external surface, unless this has not been already done during a previous working step.

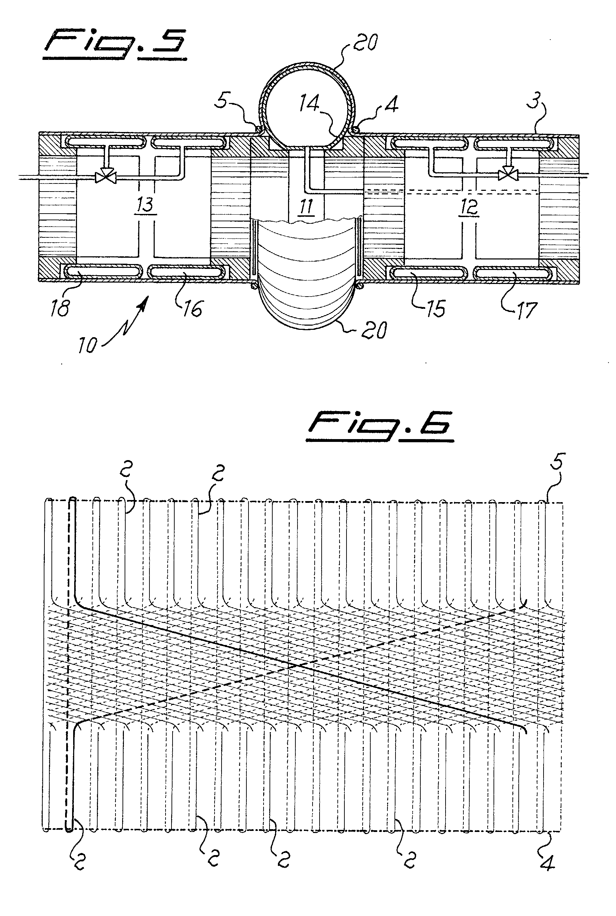

Afterwards, by inflating the air chambers 15, 16, 17 and 18 of the lateral elements 12, 13 of the drum 10, the hem portions of the tubular semifinished product are shaped in the form of a cylindrical sleeve having substantially the same diameter as that of the crown portion of said toric carcass (20); this operating step is shown in Fig. 3.

As can be seen, the bases 22, 23 of the shaped hem portions have a configuration which is substantially the same and symmetrical to the sidewalls of the carcass 20, with respect to the bead cores 4 and 5; in this manner they may be folded over the carcass, as will be seen more clearly below.

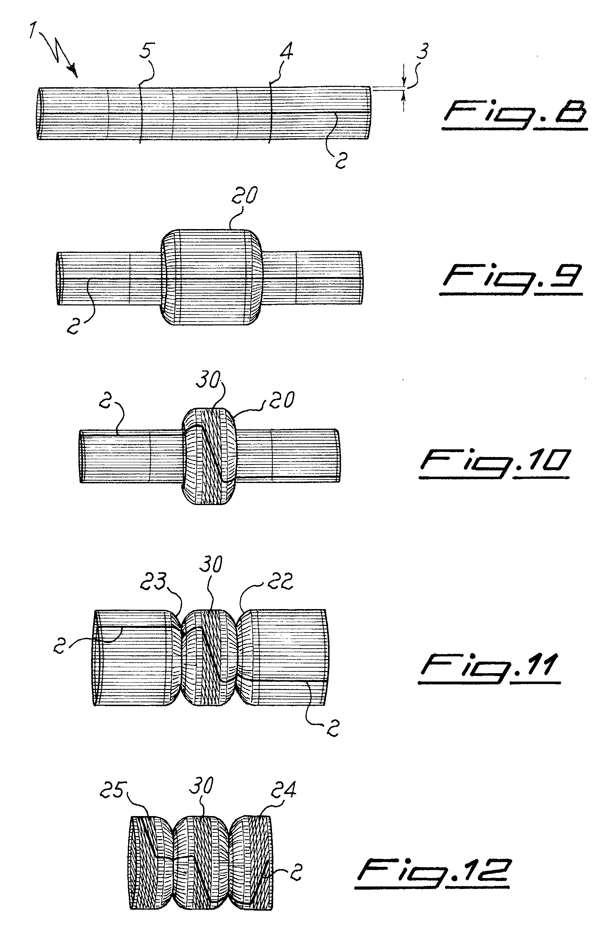

Before this step, however, belt strips 24, 25 are formed using the aforementioned hem portions; for this purpose a rotation of the end of the hem portions is carried out with respect to their bases 22 and 23, which remain fixed, in the direction indicated by the arrows in Fig. 4.

This rotation occurs about the axis of the drum, integrally with the parts of its lateral elements 12 and 13 (Fig. 10) in which the air chambers 17 and 18 are arranged, namely those farthermost from the central element 11.

The aforementioned rotation results in an inclination of the cords 2 of an angle preferably of between 5° and 35° with respect to the equatorial plane of the tubular semifinished product 1, while, as stated above, they were originally parallel to the longitudinal axis of said semifinished product.

When required, any elements for filling and supporting the two sides of the belt structure are added onto the crown portion 20c of the carcass, in a manner known per se.

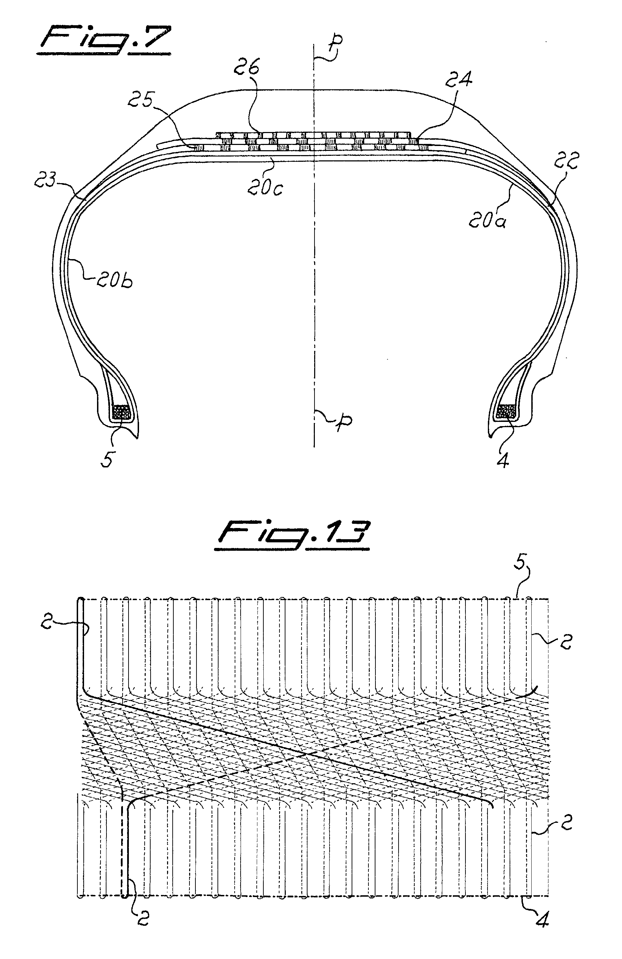

Once this stage has been completed, the hem portions are folded back onto the carcass 20, overlapping each other so as to obtain a tyre structure like shown in Figures 6 and 7.

As can be seen, in the achieved structure the cords 2 are arranged radially along the sidewalls 20a, 20b of the carcass 20 and the bases 22, 23 of the hem portions, while they are inclined with respect to the axial direction since they have assumed the layout resulting from the rotation imparted to the end of the hem portions, so as to obtain the belt strips 24, 25.

The structure thus accomplished may be terminated, for example, with the application of a so-called O° layer, i.e. a layer 26 of rubber reinforced by a cord generally made of heat-shrinkable material such as nylon® or the like, spirally wound circumferentially around the belt.

From what has been described hitherto, it is possible to understand how the tyre structure described above achieves the object predefined initially.

Indeed it does not require to assemble many components for its manufacture, as instead occurs in the known art, since it is obtained from a single tubular semifinished product, formed and folded during successive processing steps.

Furthermore, the bases 22, 23 of the hem portions adjacent to the radial carcass 20 form in fact a dual layer of reinforcing cords along the sides of the tyre, which thus acquire a particular toughness.

In particular the original density of the cords of the tubular semifinished product, which had been reduced by the toroidal forming operation carried out on said semifinished product, is substantially restored.

In this connection it must also be pointed out that the structure so configured does not have the usual folded-back portion around the beads, which terminates at the start of the sidewall or in any case in an intermediate zone thereof, nor does the belt structure have the usual strips provided with two axially external edges: this prevents possible breakages of the tyre caused in the respective zones by the free ends of the carcass ply cord and the belt strips, in particular when these cords are made of metal or in a material which is not very flexible.

Indeed, in these circumstances the sudden variation in rigidity at the free ends of the cords produces a concentration of stresses which may, with time, result in the yelding of the tyre structure with the consequent need for replacement thereof with a new tyre, before the tread band has become completely worn.

Improved protection of the two ends of the folded-back portions of the carcass ply in the crown zone may be obtained by inserting the end of each cord between two cords of the radially underlying carcass.

Likewise it is possible to insert, in the zone of the sidewalls, each wire of the ascending section of the carcass between two wires of the descending section (as can be deduced from Fig. 7).

Obviously the structure described above may be subject to variations, without altering substantially the teaching provided by the associated method for manufacturing the tyres.

For example, using an approach similar to that seen above it is possible to provide on the crown zone 20c of the carcass 20 before folding the hem portions, an additional reinforcing strip in a position radially inside the belt strips, where the cords 2 are inclined both with respect to the radial layout of the sidewalls of the carcass and with respect to the circumferential direction, according to an angle different from that of the belt strips.

A different embodiment of the structure according to the invention is illustrated in Figures 8 to 12, in a manner similar to that illustrated for the first embodiment.

As can be seen from the drawings, in which for the sake of simplicity the same numbering has been retained for elements which are structurally or functionally equivalent to those already considered, the carcass 20 is first formed by toroidally shaping the tubular semifinished product 1 (Fig. 9); then the hem portions of said shaped carcass are subjected to a relative rotation so as to incline the cords 2 of the central carcass part (shown in the drawings with a thicker line), at a predefined angle with respect to the axial direction.

For this purpose, the central element 11 of the assembling drum 10 comprises two air chambers (instead of the single one present in the first embodiment of the invention) which are rotatable with respect to each other in a manner similar to those of the lateral elements 12 and 13.

In this way it is possible to obtain a central band 30 of the carcass 20 where the cords are inclined with respect to the axial direction: in particular they are inclined differently from the inclination of the belt strips 24 and 25, as shown in Fig. 13.

Obviously the angle of inclination of the cords both in the carcass and in the folded portions may vary from case to case and it is not necessary that the inclination in the strips 24, 25 be opposed so as to have the cords of the two strips intersecting symmetrically with each other (see Fig. 6); preferably this angle will in any case have values in the region of those commonly used for belts of the conventional type, for example ranging between 5° and 35° for the belt strips and between 50° and 90° for the crown portion 20c of the carcass.

By way of example it is now given an indication of the process and the dimensional values used for the construction of a vehicle tyre with the size 225/55R15.

The so-called liner, namely a cylindrical lining layer made of impermeable rubber with a diameter of 375 mm, length of 410 mm and thickness of 2 mm, is arranged on the central element of the assembling drum, said liner having preassembled at its ends two anti-abrasive strips (width 60 mm, thickness 3 mm) intended for contact of the beads with the mounting rim.

The tubular semifinished product for forming the carcass/belt assembly is applied concentrically thereon, by means of winding or insertion, on top of said liner; it is made from about 570 steel-wire cords (composition 2+1x0.28) arranged in the longitudinal direction with respect to the semifinished product (cord thickness about 0.7 mm, length 1400 mm and density 48 cords/dm). The cords are incorporated in a thin layer of rubber (thickness about 0.3 mm).

The two bead cores, on which the rubber bead fillings are preassembled in a manner known per se, are then arranged in position; these bead cores are made of four rubberised steel wires (diameter 1.2 mm) arranged alongside each other and wound spirally in four superimposed turns.

The finished bead cores have an internal diameter of about 380 mm and a quadrangular cross-section of 6x6 mm; they are positioned on opposite sides with respect to the equatorial plane p-p (Fig. 7) of the tubular semifinished product, at a distance of about 410 mm from each other. The bead fillings, consisting of rubber with a hardness preferably greater than 85 IRHD and even more preferably equal to 95 IRHD, have a substantially triangular shape with a base of about 6 mm and height of 30 mm.

At this point the central part of the carcass (diameter 600 mm) is toroidally formed by inflating the air chamber of the central element of the assembling drum; afterwards rolling of the bead fillings is performed so as to cause them to adhere to the carcass, as well as application of the strips underneath the belt (having a cross-section 30 mm wide and 4 mm thick), said strips being positioned on the crown zone of the carcass, at 65 mm from the equatorial line.

Forming of the first belt strip is then performed by means of inflation of the chambers 16 and 18 of the drum element 13 until a diameter of about 600 mm is reached, locking of the end of the semifinished product and rotation thereof until an angle of inclination of the cords equal to 30° with respect to the equatorial line is achieved.

A thin sheet of rubber (thickness 0.3 mm) may now be arranged on top of the rotated part of the hem portion in order to fix in position the configuration achieved; thereafter said hem portion is folded onto the carcass so as to form a first belt strip on the crown of the carcass and the whole assembly is then compacted by means of a rolling operation.

The succession of steps described above is also performed for the second carcass hem portion so as to form the second folded belt strip.

The tyre structure is then completed with application of a zero-degrees layer, a tread band and sidewalls in a manner known per se.

Finally, it must be pointed out that with the teaching provided by the present invention, it is possible to manufacture tyres with carcass structures having only one hem portion folded to form a belt strip, or also structures wherein the hem portions are folded only along the sidewalls of the carcass without covering the crown portion thereof, since they are shorter than the examples considered above.

In other words, it is possible to have also asymmetrical carcass structures, comprising a single belt strip obtained by folding a corresponding hem portion of the tubular semifinished product in accordance with what explained above, as well as structures wherein the carcass ply does not produce any belt strip but its hem portions are nevertheless folded to cover the sidewalls of the carcass and/or increase the density of the cords of said sidewalls.

Finally it must also be added the drum for assembling of the tyre according to the invention may differ from that considered in this description.

In particular, in place of the air chambers it is possible to use known systems of the mechanical type to obtain the variations in diameter required in order to form toroidally the carcass and the end portions of the tubular semifinished product.

All these and other similar modifications nevertheless fall within the scope of the following claims.

## Claims

1. Radial tyre for vehicle wheels, provided with a toric carcass (20) having a central crown portion (20c) and two axially facing sidewalls (20a, 20b) terminating in a pair of beads for securing to a corresponding mounting rim, comprising at least one carcass ply (1) provided with reinforcing cords (2) oriented substantially along radial planes with respect to the axis of rotation of the tyre, said carcass ply having axially facing end portions each folded around a corresponding reinforcing bead core (4, 5), and a belt structure located on the crown of said carcass comprising at least one pair of belt strips (24, 25) radially overlapping one over the other, each strip having a plurality of cords oriented obliquely with respect to the equatorial plane (p-p) of the tyre, parallel to each other in a strip and intersecting those of the adjacent strip,
**characterized in that** at least one folded end portion of said carcass ply (1) extends radially outwards along the sidewall (20a, 20b) of said carcass, substantially at least up to said crown portion (20c).

2. Tyre according to Claim 1, wherein said end portion also covers the top part of the carcass (20).

3. Tyre according to Claim 2, wherein, along a belt strip (24) which covers the carcass (20), said cords (2) lie inclined with respect to the cords in the underlying zone of the carcass.

4. Tyre according to Claim 3, wherein a second end portion of the semifinished product (1) is folded around one of the bead cores (4, 5) and extends along the side of the carcass (20) until it overlaps the other folded end portion.

5. Tyre according to Claim 4, wherein, along a belt strip (25) of said second end portion, the cords (2) have an inclined arrangement symmetrical to that of the underlying belt strip (24), with respect to the centre plane of the tyre.

6. Tyre according to Claim 5, wherein, along the sidewalls of the carcass (20), said cords (2) have a substantially radial arrangement with respect to the tyre.

7. Tyre according to Claim 6, wherein along a central portion (30) of the carcass (20), said cords (2) are inclined with respect to the central arrangement.

8. Tyre according to Claim 1, wherein the cords (2) are made of metal.

9. Method of manufacturing a tyre for vehicle wheels, comprising:
- a toric carcass (20) with a central crown portion (20c) and two axially opposite sidewalls (20a, 20b) terminating in a pair of beads for securing to a corresponding mounting rim, said carcass being obtained with at least one carcass ply (1) provided with reinforcing cords (2) oriented substantially along radial planes with respect to the axis of rotation of the tyre, wherein the carcass ply has axially facing end portions each folded around a corresponding bead core (4, 5);
- a belt structure located on the crown of said carcass and comprising at least one pair of belt strips (24, 25) radially overlapping one over the other, each strip having a plurality of cords oriented obliquely with respect to the equatorial plane (p-p) of the tyre, parallel to each other in a strip and intersecting those of the adjacent strip, comprising the steps of:
- providing said carcass ply (1) in the form of a tubular semifinished product,
- fitting the bead cores (4, 5) on the tubular semifinished product, each spaced apart from the corresponding end of the tubular semifinished product;
- toroidally shaping the central portion of said tubular semifinished product lying between the bead cores, thereby producing said carcass (20);
- shaping substantially as a cylindrical sleeve at least one end portion of the tubular semifinished product lying between one of the bead cores and the corresponding end of the semifinished product itself, according to a diameter substantially equal to that of said toroidally shaped carcass (20);
- folding back in an axial direction said shaped end portion around the associated bead core, and overlapping it on the adjacent sidewall of the carcass.

10. Method according to Claim 9, wherein said at least one folded end portion of the tubular semifinished product (1) extends axially towards the carcass (20) until it overlaps the top part of said carcass and is subject to an axial rotation thereby obtaining a belt strip (24) in which the cords (2) are inclined with respect to the axial direction.

11. Method according to Claim 10, further comprising the steps of:
- shaping substantially as a cylindrical sleeve a second end portion of the tubular semifinished product, lying between the other bead core (4, 5) and the corresponding end of the semifinished product itself;
- folding back in an axial direction said second end portion around the associated bead core and overlapping it on the adjacent side of the carcass (20).

12. Method according to Claim 11, wherein said second end portion is subject to an axial rotation in a direction opposite to that of the first end portion, thereby obtaining a belt strip (25) in which the cords (2) have an inclination opposite to that of the other strip (24).

13. Method according to Claim 12, wherein the step of forming the carcass (20) is carried out imparting an axial rotation to the portion of the tubular semifinished product (1) lying between the two bead cores (4, 5), thereby obtaining a central portion (30) of the carcass where the cords (2) are inclined with respect to the radial arrangement along its sidewalls (20a, 20b).

14. Drum for carrying out the method according to any of Claims 9 to 13, comprising a central element (11) in which a toroidal air chamber (14) is arranged, **characterized in that** it comprises two lateral elements (12, 13) on opposite sides with respect to the central element, which are freely rotating with respect to said central element and are each respectively provided with at least two toroidal air chambers (15 and 17; 16 and 18).

15. Drum according to Claim 14, wherein at least one part of the lateral elements (12, 13) with the air chamber (17, 18) furthermost from the central element, is rotatable axially with respect to the adjacent wall of the same lateral element.
